(19) **Europäisches Patentamt / European Patent Office / Office européen des brevets**

(11) **EP 4 657 380 A1**

(12) # EUROPEAN PATENT APPLICATION

(43) Date of publication:
**03.12.2025 Bulletin 2025/49**

(21) Application number: **25179258.6**

(22) Date of filing: **28.05.2025**

(51) International Patent Classification (IPC):
**G06T 11/00** (2006.01)    **G06T 5/60** (2024.01)
**G06T 5/73** (2024.01)

(52) Cooperative Patent Classification (CPC):
**G06T 11/008; G06T 5/60; G06T 5/73;**
G06T 2207/10081; G06T 2207/20084;
G06T 2211/416; G06T 2211/441

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.05.2024   US 202418680941**

(71) Applicant: **Carl Zeiss X-Ray Microscopy, Inc.
Dublin, California 94568 (US)**

(72) Inventor: **Andrew, Matthew
Dublin, 94568 (US)**

(74) Representative: **Patentanwälte Bressel und
Partner mbB
Potsdamer Platz 10
10785 Berlin (DE)**

Remarks:
MISSING PARTS INCLUDED UNDER RULE 56(3)
EPC and CORRECT PARTS INCLUDED UNDER
RULE 56a(4) EPC

(54) **ROBUST MULTISCALE X-RAY SUPER-RESOLUTION RECONSTRUCTION**

(57)    A technique is disclosed for analyzing and displaying the extent to which the images and structures inferred by a physically seeded multiscale network correspond to genuine resolution improvement through noise insensitive point spread function deconvolution, and the extent to which they correspond to the hallucination of realistic looking structures with realistic frequency contents. A relative modulation transfer function can be computed, which can represent the distribution of frequency components in a particular reconstruction (e.g., a volumetric reconstruction from high-resolution data) that are not robustly recovered by a different reconstruction (e.g., a volumetric reconstruction via processing of low-resolution data with a trained neural network). The high-frequency portion of these frequency components can represent hallucinations introduced by a trained neural network, and can be leveraged to filter the different reconstruction prior to further use.

FIG. 2

EP 4 657 380 A1

# Description

TECHNICAL FIELD

The present disclosure relates to X-ray imaging generally and more specifically to evaluating and improving neural-network-improved reconstructions.

BACKGROUND

X-ray Microscopy Imaging is a field of imaging that is used to acquire imaging data for many different types of samples across many different use cases. X-ray Microscopy Imaging has found uses in biology (e.g., imaging biomaterials, soft tissues, and the like), material science (e.g., imaging the internal microstructure of a material), manufacturing (e.g., non-destructively imaging internal components), and many other fields. Individual images (e.g., projections) can be acquired by directing radiation from an X-ray source, through a sample, towards a detector. Multiple projections can be acquired for a single sample by rotating the direction of travel of the X-ray radiation with respect to the sample (e.g., rotating the X-ray source and detector with respect to the sample). Often, the acquired imaging data (e.g., containing multiple projections) is used to generate a three dimensional reconstructed volumes of the sample that was imaged, such as through the use of computed tomography (CT).

While X-ray Microscopy provides many benefits, one challenge is that of scale. Often, the resolution required to image fundamental structures comes at the expense of a field of view required to image an entire sample. Furthermore, high-resolution tomography acquisition tends to be extremely slow, especially for interiors of large samples. While high-resolution detectors exist, they are typically significantly less sensitive than low-resolution detectors, especially to high-energy X-rays. Also, high-resolution sources are typically significantly less powerful than low-resolution sources. When interior tomography occurs within a large sample, the relatively large amount of material outside the field of view can project into the volume, effectively adding noise and artifacts. The non-imaged regions of the sample can act as an X-ray filter, biasing the X-ray spectrum to higher energies, which can be especially problematic when interior tomography occurs within a large sample. Since the high-resolution detectors are not as sensitive to high-energy X-rays, the resultant projections can be noisy. Even if multiple imaging parameters and/or equipment are capable of generating images with the same resolution, the specific imaging parameters and/or equipment may result in images of different quality, such as images with better or worse sharpness, noise, artifacts, point spread function, and the like.

When imaging is required of a large field of view, there are traditionally only two options. The first option is to rely on low-image-quality acquisition techniques, which can achieve a large field of view, but at the expense of image quality (e.g., at the expense of image resolution, image sharpness, image noise, and the like), which can make important features undistinguishable or can otherwise be undesirable. If a high-quality image is required of a large field-of-view, large area composite projections can be created and subsequently reconstructed from two or more projections offset with respect to each other. However, such acquisition modes are generally prohibitively slow and unreliable.

More recently, the use of deep-learning-based image processing techniques have enabled low-quality image data to be processed to achieve high-quality outputs (e.g., higher resolution and/or fewer artifacts) and reduce noise. As a result, imaging can be achieved that has both high-quality and a large field-of-view. However, use of these types of deep-learning-based image processing techniques can have other undesirable consequences.

Image resolution is typically defined in terms of a modulation transfer function (MTF), which corresponds to the frequency domain expression of an image point spread function (PSF). Generally speaking, an image MTF can be truly measured only on known structures (such as resolution targets), or in specific cases can be inferred from specific metrics on images. For simple or linear imaging processes, the MTF can be estimated through an examination of the frequency content of the images. This examination becomes unreliable, however, when the frequency content is modulated through the presence of other high frequency content, such as noise or nonlinear imaging artifacts. In the case of deep-learning-based image inference, this type of analysis is particularly problematic, as the neural network can introduce significant high-frequency content through hallucination, which can confuse or confound analysis efforts. As such, objectively determining true resolution improvement (i.e. corresponding to high frequency features, rather than hallucination) by a neural network can be problematic, which can stifle research and improvements in the field. Additionally, it can be especially difficult to compensate for hallucinations introduced by neural networks.

There is a need for improved image processing techniques that provide an objective assessment of performance.

BRIEF SUMMARY

Aspects and features of the present disclosure include a method comprising receiving an improved volumetric reconstruction of a subject. The improved volumetric reconstruction is generated by supplying a trained neural network with first imaging data acquired of the subject. The first imaging data is acquired using an electromagnetic radiation imager. The method further comprises receiving a baseline volumetric representation of the subject. The method further comprises calculating a relative modulation transfer function (RMTF) distribution for the improved volumetric reconstruction based at least in part on the baseline volumetric representation. The method further comprises determining an upper threshold value. The method further comprises determining out-of-threshold frequency components based at least in part on the relative modulation transfer function distribution for the improved volumetric reconstruction and the upper threshold value. The method further comprises filtering the improved volumetric reconstruction based at least in part on the out-of-threshold frequency components.

In some cases, calculating the RMTF distribution includes applying the formula

$$RMTF = \frac{fft(V_{improved} - B)}{fft(B)}$$

where RMTF is the RMTF distribution, $V_{improved}$ is the improved volumetric reconstruction, and B is the baseline volumetric representation. In some cases, the method further comprises storing a representation of the out-of-threshold frequency components in association with at least one of the improved volumetric reconstruction and the improved and filtered volumetric reconstruction.

In some cases, the baseline volumetric representation is a volumetric reconstruction generated from second imaging data acquired of the subject, the second imaging data having a higher resolution than the first imaging data. In some cases, the first imaging data is acquired using a first set of operating parameters, and wherein the second imaging data is acquired using the electromagnetic radiation imager using a second set of operating parameters. In some cases, training the neural network includes minimizing a loss function based at least in part on the improved volumetric reconstruction and the volumetric reconstruction generated from the second imaging data.

In some cases, the first imaging data is x-ray imaging data and the electromagnetic radiation imager is an x-ray imager. In some cases, the method further comprises performing image segmentation on the improved and filtered volumetric reconstruction; and outputting the image segmentation results using a display device. In some cases, the method further comprises receiving user input via a user input device, wherein determining the upper threshold value includes dynamically updating the upper threshold value based at least in part on the user input in response to receiving the user input; and presenting a display, the display including at least one of the out-of-threshold frequency components and the improved volumetric reconstruction, wherein presenting the display includes dynamically updating the display in response to receiving the user input.

Aspects of the present disclosure include a method for evaluating artificial intelligence resolution improvements. The method comprises receiving first imaging data acquired of a subject. The first imaging data is acquired using an electromagnetic radiation imager. The first imaging data has a first resolution. The method further comprises generating a first reconstruction based at least in part on the first imaging data. The method further comprises receiving second imaging data acquired of the subject. The second imaging data has a second resolution that is higher than the first resolution. The method further comprises generating a second reconstruction based at least in part on the second imaging data. The method further comprises training a neural network based at least in part on the first imaging data and the second imaging data. The neural network, when trained, is usable to generate an improved reconstruction based at least in part on the first imaging data. The method further comprises generating the improved reconstruction using the neural network. The method further comprises calculating a first relative modulation transfer function (RMTF) distribution for the first reconstruction based at least in part on the second volumetric reconstruction. The method further comprises calculating an improved RMTF distribution for the improved reconstruction based at least in part on the second volumetric reconstruction. The method further comprises determining a contrast threshold. The method further comprises calculating a first RMTF resolution based at least in part on the first RMTF distribution and the contrast threshold. The method further comprises calculating an improved RMTF resolution based at least in part on the improved RMTF distribution and the contrast threshold. The method further comprises generating a resolution evaluation based at least in part on the first RMTF resolution and the improved RMTF resolution. The resolution evaluation being indicative of an improvement in resolution achieved by the neural network. The method further comprises presenting a display on a display device based at least in part on the generated resolution evaluation.

In some cases, calculating the first RMTF distribution includes applying the formula

$$RMTF = \frac{fft(V_1 - V_2)}{fft(V_2)}$$

where RMTF is the first RMTF distribution, $V_1$ is the first reconstruction, and $V_2$ is the second reconstruction. In some cases, the first imaging data is acquired using a first set of operating parameters, and wherein the second imaging data is acquired using the electromagnetic radiation imager using a second set of operating parameters. In some cases, the first reconstruction is a first volumetric reconstruction, wherein the second reconstruction ($V_2$) is a second improved volumetric reconstruction. In some cases, the first imaging data is x-ray imaging data and the electromagnetic radiation imager is an x-ray imager.

In some cases the method further comprises the neural network for future use based at least in part on the resolution evaluation. In some cases, selecting the neural network for future use based at least in part on the resolution evaluation includes: receiving a plurality of alternate resolution evaluations associated with a plurality of alternate trained neural networks trained based at least in part on the first imaging data and the second imaging data; and comparing the plurality of alternate resolution evaluations with the resolution evaluation; and selecting the neural network based at least in part on the comparison between the plurality of alternate resolution evaluations and the resolution evaluation.

Aspects of the present disclosure include a system comprising: a control system including one or more processors; and a memory having stored thereon machine readable instructions; wherein the control system is coupled to the memory, and the method(s) above is(are) implemented when the machine executable instructions in the memory are executed by at least one of the one or more processors of the control system.

Aspects of the present disclosure include a computer-program product tangibly embodied in a non-transitory machine-readable storage medium, including instructions configured to cause a data processing apparatus to perform the method(s) above.

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 is a schematic diagram depicting an imaging data processing system, according to certain aspects of the present disclosure.

FIG. 2 is a flowchart depicting a process for analyzing improved volumetric reconstructions according to certain aspects of the present disclosure.

FIG. 3 is a process for evaluating neural-network-based resolution improvements according to certain aspects of the present disclosure.

FIG. 4 is a graph depicting RMTF distributions according to certain aspects of the present disclosure.

FIG. 5 is a flowchart depicting a process for generating a graphical user interface, according to certain aspects of the present disclosure.

FIG. 6 is a block diagram of an example system architecture for implementing features and processes of the present disclosure.

DETAILED DESCRIPTION

Certain aspects and features of the present disclosure relate to a technique for analyzing and displaying the extent to which the images and structures inferred by a physically seeded multiscale network correspond to genuine resolution improvement through noise insensitive point spread function deconvolution, and the extent to which they correspond to the hallucination of realistic looking structures with realistic frequency contents. A relative modulation transfer function can be computed, which can represent the distribution of frequency components in a particular reconstruction (e.g., a volumetric reconstruction from high-resolution data) that are not robustly recovered by a different reconstruction (e.g., a volumetric reconstruction via processing of low-resolution data with a trained neural network). The high-frequency portion of these frequency components can represent hallucinations introduced by a trained neural network, and can be leveraged to filter the different reconstruction prior to further use.

During X-ray Microscopy procedures, radiation is emitted from one or more emitters (X-ray sources) and is directed to one or more detectors. A sample (e.g., a subject being analyzed) located between the emitter(s) and detector(s) can affect the amount of radiation received by the detector(s), such as by absorbing, reflecting, or otherwise affecting the radiation incident on and/or passing through the sample. The resultant information collected by the detector(s) can be known as data or imaging data. As used herein, the terms scan or scanning can refer to the acquisition of imaging data, optionally during movement of the sample with respect to the emitter(s) and/or detector(s). As used herein, the term computed tomography (CT) is intended to include the use of X-ray imaging data to generate a three-dimensional reconstructed volume of a sample. A three-dimensional reconstructed volume can be a data set indicative of the three-dimensional structure or a three-dimensional image of the sample (e.g., a three-dimensional image composed of voxels). X-ray imaging is generally non-destructive to the sample.

Certain aspects and features of the present disclosure can be used to generate and analyze improved imaging data, such as improved two-dimensional images, improved three-dimensional volumes (e.g., improved CT reconstructed volumes), or other improved images or volumes (e.g., laminography reconstructions) reliant upon the imaging data. Deep neural networks (DNNs) can be used to generate or improve imaging data or a reconstructed volume, but can also introduce hallucinations. Certain aspects and features of the present disclosure relate to generating a relative measure of resolution for outputs of such DNNs despite any introduced hallucinations.

Modulation transfer function (MTF) is a concept that can be used to define and understand an image's resolution. MTF conveys both resolution and contrast information of the image. The MTF shows the amplitude change that occurs in the imaging system at various spatial frequencies. Low spatial frequencies relate to large structures and high spatial frequencies relate to small structures. Generally, low spatial frequencies pass through the imaging system without much attenuation, but high spatial frequencies are attenuated more. This attenuation of high spatial frequencies results in lower available contrast. Thus, smaller structures will blur and eventually be indistinguishable from one another.

MTF is often calculated based on a test pattern (e.g., a test phantom). In a two-dimensional example, spatial frequency is represented by patterns of repeating line pairs (e.g., white and black lines) of different widths. Each set of line pairs can be described in terms of line-pairs per pixel. Thus, the low spatial frequencies have a relatively low number of line-pairs per pixel. As the number of line-pairs per pixel increases, it becomes more difficult to distinguish adjacent line-pairs. The MTF shows the ability to differentiate these various test patterns. In other words, the MTF shows the ability to differentiate structures of various sizes, from large (e.g., low spatial frequency) to small (e.g., high spatial frequency). The MTF is the Fourier transform of the point spread function.

Certain aspects of the present disclosure relate to a modification of the MTF concept, denoted the relative modulation transfer function (RMTF). As disclosed in further detail herein, the RMTF allows for relative transfer functions to be examined. Thus, in the application of deep-learning resolution recovery, the true resolution boosting performance of the network can be effectively examined despite any hallucinations introduced.

Considering an imaging operator G that acts on a volume domain structure S, creating a volumetric representation V of S complete with all inherent sources of spurious signal (e.g. noise, artifacts, image blur, and the like). This imaging operator could be considered as a high fidelity "digital twin" for an existing system (e.g. X-ray microscope). In such a case, it would have parameters P such as source position, sample position, exposure times, spectral behavior, source spot, detector MTF, source power, and the like. V can be defined with the following equation: $V = G(S, P)$.

In this example, considering two sets of parameters, $P_1$ and $P_2$, which correspond to a low resolution and high resolution scan of the same structure S. In this example, the registration operator is not considered. The low- and high- volumetric representations can be defined with the following equations: $V_1 = G(S, P_1)$ and $V_2 = G(S, P_2)$.

In this example, a volume $V_{12}$ can be constructed by applying a neural network N to $V_1$. This volume $V_{12}$ can be defined with the following equation: $V_{12} = N(V_1)$. With the network trained to minimize a loss function L between $V_{12}$ and $V_2$, the neural network N can be defined with the following equation: $N = argmin(loss (V_{12}, V_2))$.

In this example, the RMTF can be defined as the Fourier transform of the residual between two volumetric representations of the subject divided by the Fourier transform of the subject. First, the residuals between V and structure S can be considered to determine the full RMTF. This term can be interpreted as the frequency components not recovered by the imaging operator G. The RMTF can be defined by the following equation:

$$RMTF = \frac{fft(V - S)}{fft(S)}.$$

Independent RMTF distributions can be used to examine the extent to which high frequencies recovered by the neural network N represent real structures versus hallucinated high frequencies.

A threshold can be set for defining the resolution. The RMTF resolution is the spatial frequency at which the RMTF distribution - or a curve approximating the RMTF distribution - for a particular volume crosses the threshold. Since RMTF resolutions are relative, the amount of true resolution boost provided by a neural network can be the RTMF resolution of the neural-network-improved volume subtracted by the RTMF resolution of the input volume (e.g., the low-resolution volume).

When the structure (S) is known, such as in simulations, RMTF distributions can be easily obtained and compared. Generally, however, S is not known. The RMTF concept, however, is still useful, as S can be approximated by $V_2$. In this case the $(V_{12}, V_2)$ RMTF can be computed. This can be interpreted as the distribution of frequency components in $V_2$ not robustly recovered by $V_{12}$. Any frequency components in the resulting reconstruction above some threshold are therefore not reliable and could be removed from the reported reconstruction (e.g. using some low-pass filter). We could consider this masking function M, such that $M(V_{12})$ would have fewer high frequency components (it would appear less sharp), but the features reported would be more robust than those in the raw reconstruction $V_{12}$.

When relying on RMTF measurements, it is generally assumed that high frequency components present within the residual are associated with the frequency contribution of the original structure S (or $V_2$) (e.g., that the high frequencies in $V_{12}$ are predominantly correlated with those in S). This assumption is generally acceptable, however it may be broken by the presence of noise or artefacts in the original dataset $V_1$ and target datasets $V_2$/ S, which creates high frequencies that are uncorrelated and thus present in the residual. To accommodate for these situations, noise can be removed from both the datasets used in the computation of the RMTF. $V_{12}$ is generally noise free, as the network used to perform the resolution recovery also acts to denoise the dataset. Similarly S is, by definition, noise free, so when computing the RMTF using simulated data the resulting distributions are non-problematic. The problematic cases are when using $V_1$ or $V_2$ (noisy datasets) to compute either the $(V_1, V_2)$ or the $(V_{12}, V_2)$ RMTF. In these cases, it may be desirable to remove the noise from the data using a noise removing reconstruction technique (e.g. DeepRecon Pro, reconstruction technology algorithm by ZEISS).

Additionally, as a network is a strongly non-linear operator, it may not recover all high frequency features equally. As a result, sparse small (high frequency) features may be recovered less robustly than high frequency features more evenly distributed in the training volume. The RMTF gives an aggregate view across all features of that frequency component, and so can be viewed as the "good data" limit of performance. While this does pose an upper bound on performance, the issue it highlights (that of sparse data) is an inverse problem / deep learning / AI (artificial intelligence) issue, rather than an information recovery issue. If the network was trained with the right set of data (corresponding to a denser sampling of the features of interest) it could be trained to robustly recover those features. The RMTF examines the information limit of performance, rather than the data limit.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative embodiments but, like the illustrative embodiments, should not be used to limit the present disclosure. The elements included in the illustrations herein may not be drawn to scale.

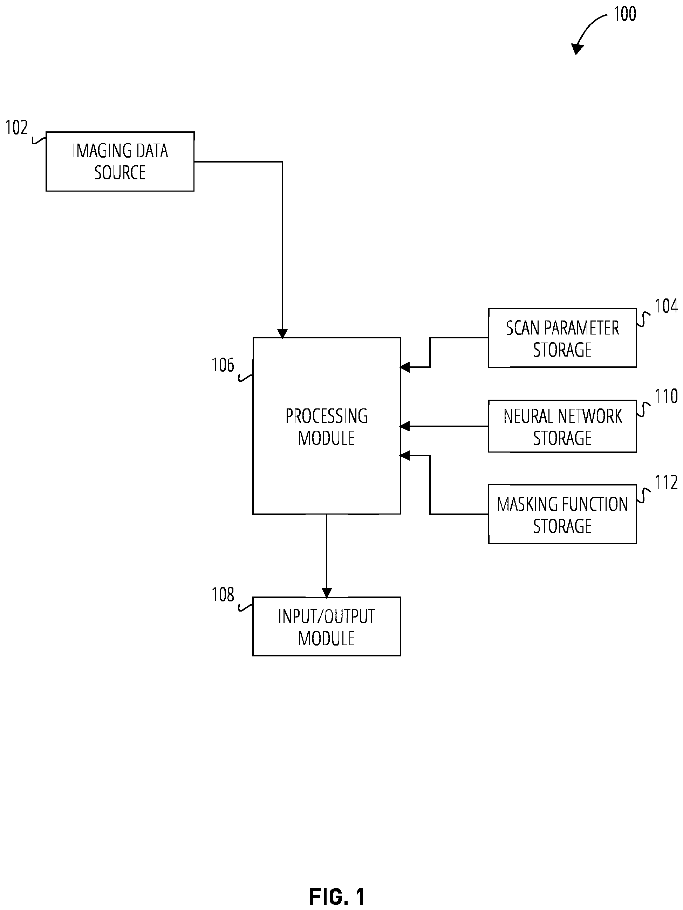

FIG. 1 is a schematic diagram depicting an imaging data processing system 100, according to certain aspects of the present disclosure. The imaging data processing system 100 (e.g., control system) can include an imaging data source 102 that provides imaging data to a processing module 106. The imaging data source 102 can be any suitable source of imaging data, such as an imager (e.g., an imaging machine, such as an X-ray microscope or a CT scanner), a database of imaging data, a local memory storing imaging data, a removable memory storing imaging data, or the like. Certain aspects and features of the present disclosure are especially useful when the imaging data source 102 is an imager, such as an X-ray microscope.

The processing module 106 can process imaging data from the imaging data source 102. In some cases, the processing module 106 can control the imaging data source 102. In some cases, the processing module 106 can access a scan parameter storage 104 to retrieve preset operating parameters to use during a scanning procedure. Examples of operating parameters include acceleration voltage and power of X-ray source, X-ray filter, exposure time, number of projections, specific angle(s) used for projection(s), axial (e.g., X, Y, or Z) displacement per projection, and the like.

The processing module 106 can use the imaging data to train a neural network, such as an artificial neural network (ANN) (e.g., a deep neural network (DNN), a convolutional neural network (CNN), or the like), and/or use such a trained neural network to process imaging data or a reconstructed volume into improved imaging data or an improved reconstructed volume. The processing module 106 can also carry out reconstruction of imaging data (e.g., raw imaging data or improved imaging data) to generate reconstructed volumes (e.g.,

converting a set of acquired projections into a three-dimensional reconstructed volume). In some cases, the processing module 106 can access a pre-trained neural network from a neural network storage 110, which can be applied as-is or can be further trained. In some cases, the pre-trained neural network can be a neural network that is generated using a federated learning technique, in which multiple trained neural networks can be collected and combined to generate a collaborative neural network that is distributed as the pre-trained neural network. In such cases, each pre-trained neural network can be associated with the same category of sample and/or the same or similar acquisition parameters, and the pre-trained neural network accessed by the processing module 106 can be accessed based on a provided category and/or set of acquisition parameters.

In some cases, a neural network trained using a processing module 106 can be stored in the neural network storage 110, optionally with additional information associated with the sample and/or the scan. Additional information associated with the sample can include identification information (e.g., a unique identifier or a description), category information (e.g., an indication as to the category to which the sample belongs), imaging data or a reconstructed volume of the sample generated using the neural network, imaging data or a reconstructed volume of a standardized set of imaging data (e.g., of a generic standardized sample or a specific standardized sample selected to be similar to the sample, such as having the same category). Additional information associated with the scan can include imager identification information (e.g., a model number of the X-ray imager, a model number or type of the X-ray source(s) and/or detector(s), and the like), scan recipe information (e.g., information about one or more parameters used in the scanning of the sample), and the like. Any information stored in the neural network storage 110 in association with a pre-trained neural network can be used to help select a pre-trained neural network to use when processing imaging data from a new sample.

The processing module 106 can receive first imaging data and second imaging data from the imaging data source 102. In some cases, the processing module 106 can control an imager to generate the first imaging data using a first set of operating parameters and to generate the second imaging data using a second set of operating parameters. The first imaging data can be acquired at a lower resolution than the second imaging data. In some cases, the first imaging data can cover more of the subject than the second imaging data. In some cases, the portions of the subject imaged by the second imaging data can overlap at least some of the portions of the subject imaged by the first imaging data. In some cases, the first set of operating parameters and/or second set of operating parameters can be selected from the scan parameter storage 104.

Processing module 106 can apply the first imaging data (or a reconstruction thereof) to a neural network to output improved imaging data (or an improved reconstruction). The neural network can be an untrained neural network or a pre-trained neural network (e.g., from neural network storage 110). The neural network can be trained or further trained by minimizing a loss function between the improved imaging data (or an improved reconstruction) and the second imaging data (or a reconstruction thereof). Once trained or further trained, the neural network can be optionally stored at neural network storage 110.

Processing module 106 can generate reconstructions from imaging data. Eventually, processing module 106 can generate both a first reconstruction (e.g., first volumetric reconstruction) of the first imaging data and an improved reconstruction (e.g., an improved volumetric reconstruction) that is either improved from the first reconstruction or reconstructed form improved imaging data. The first reconstruction can also be known as a pre-processed reconstruction (e.g., pre-processed volumetric reconstruction). The processing module 106 can also generate a second reconstruction of the second imaging data (e.g., second volumetric reconstruction). This second reconstruction can be known as a baseline reconstruction (e.g., baseline volumetric representation)

Processing module 106 can calculate RMTF distributions for both the first reconstruction and the improved reconstruction. Each RMTF distribution can use the baseline reconstruction as a baseline from which to calculate the RMTF distributions.

An RMTF distribution can be calculated between any reconstruction (e.g., reconstructed volume), which can be known as a comparison reconstruction, and a baseline (e.g., baseline reconstructed volume). Generally, the comparison reconstruction will be the first reconstruction or the improved reconstruction, with the baseline being the second reconstruction. In such cases, the second reconstruction is being used as a suitable replacement for the actual, physical subject itself, since the actual subject itself is not known. However, in cases where the subject is known, such as during simulations or when a known subject is imaged, the baseline can be that known subject (e.g., a volumetric representation of the subject). RMTF can be calculated according to the following equation:

$$ RMTF = \frac{fft(V_{comp} - B)}{fft(B)}, $$

where $V_{comp}$ is the comparison reconstruction and B is the baseline. The $V_{comp}$ and B can be volumetric representations (e.g., collection of voxels).

The $V_{comp}$ - $B$ term can represent a residual. This residual can be interpreted as the portions of the baseline that are not recovered in the reconstruction due to the various factors that affect how the comparison reconstruction is capture and generated. When the comparison reconstruction is an improved reconstruction, these various factors include hallucinations introduced by the neural network. The Fourier transform of this residual represents the frequency components of the residual. Since hallucinations tend to occur at high frequencies, the high frequency portion of the RMTF distribution above an upper threshold can be inferred to represent the hallucinations introduced by the neural network. This profile of high frequencies attributable to hallucinations can be stored as a masking function in a masking function storage 112.

Processing module 106 can thereafter filter those frequency components out of the comparison reconstruction to produce a more accurate representation of the underlying subject. While the reconstruction would have fewer high-frequency components, which may cause it to appear less sharp, the underlying features reported would nevertheless be more robust than in the pre-filtered reconstruction. These features can then be more reasonably relied upon for further analysis, such as segmentation.

The scan parameter storage 104, neural network storage 110, and masking function storage 112 can be implemented in separate storage devices or a combined storage device, as part of the processing module 106 or separate module(s). In some cases, the scan parameter storage 104, neural network storage 110, and/or masking function storage 112 can be stored on a memory accessible locally or remotely (e.g., accessible via a network such as a local area network, a wide area network, a cloud network, or the Internet).

An input/output module 108 can be coupled to the processing module 106 to receive user input and provide output to a user. Any suitable input/output devices can be implemented in the input/output module 108, such as a keyboard, a mouse, a display (e.g., computer monitor), a touchscreen, light emitting diodes (LEDs) or other light sources, buttons, and the like. The processing module 106 can present reconstructions (e.g., reconstructed volumes), RMTF distributions, and/or furhter information derived therefrom to a user via the input/output module 108. In some cases, the input/output module 108 can store imaging data, a reconstructed volume, and/or a trained neural network (e.g., on a local memory, removable memory, or network-accessible memory). In some cases, a neural network trained using a processing module 106 and/or a masking function can be stored in association with the imaging data and/or reconstructed volume (e.g., improved and filtered reconstructed volume).

In some cases, any of the imaging data source 102, the processing module 106, the input/output module 108, the scan parameter storage 104, the neural network storage 110, and the masking function storage 112 can be incorporated into one or more housings in any suitable combination. Any combination of one or more of the imaging data source 102, the processing module 106, the input/output module 108, the scan parameter storage 104, the neural network storage 110, and the masking function storage 112 can be implemented locally (e.g., on the same device as one another or on devices coupled by a bus or local area network) or remotely (e.g., via a wide area network, the Internet, or a cloud network). In an example, a processing module 106 can be implemented on a user's laptop computer, the imaging data source 102 can be implemented on a cloud-based health record database (e.g., one or more servers accessible via the Internet), and the scan parameter storage 104, neural network storage 110, and masking function storage 112 can be implemented on a separate cloud-based analysis database (e.g., one or more servers accessible via the Internet).

In another example, the processing module 106 can be incorporated into an imaging data source 102, such as a computer for processing imaging data that is also used to control an X-ray microscope. In another example, the processing module 106 can be incorporated into an individual computer that accesses, via a network-accessible database, imaging data supplied from a separate CT scanner or X-ray microscope.

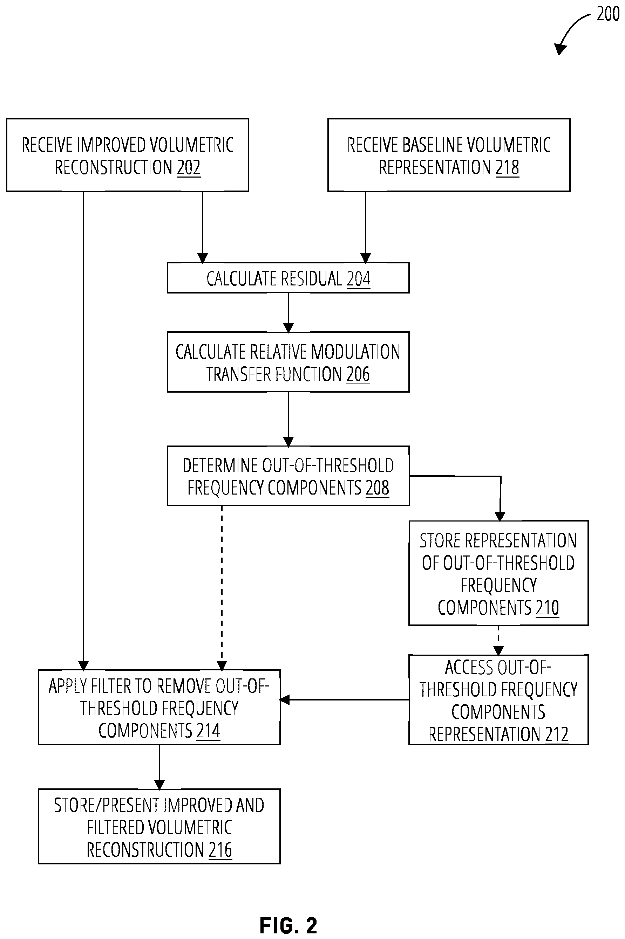

FIG. 2 is a flowchart depicting a process 200 for analyzing improved volumetric reconstructions according to certain aspects of the present disclosure. Process 200 can be performed using any suitable hardware, such as processing module 106 of FIG. 1.

At block 202, an improved volumetric reconstruction is received. In some cases, receiving the improved volumetric reconstruction can include receiving first imaging data and applying the first imaging data (or a reconstruction thereof) to a trained neural network to generate the improved volumetric reconstruction. The trained neural network can be trained as described in further detail herein.

At block 218, a baseline volumetric representation can be received. Receiving the baseline volumetric representation can include receiving second imaging data and generating a volumetric reconstruction from the second imaging data. The second imaging data can be a higher resolution scan of the same subject as the first imaging data. In some cases, the first imaging data can include a scan of a portion of the subject and the second imaging data can include a scan of a subset of that portion of the subject. In some cases, however, the baseline volumetric representation can be a volumetric representation of the subject (e.g., the portion of the subject and/or the subset of the portion of the subject), such as from a known subject or from simulated data. Such a volumetric representation of the subject may be more exact and accurate than a volumetric reconstruction from second imaging data, but may not be available in all cases.

At block 204, a residual is calculated between the improved volumetric reconstruction and the baseline volumetric representation. Calculating the residual can include subtracting the baseline volumetric representation from the improved volumetric reconstruction.

At block 206, a relative modulation transfer function (RMTF) distribution for the improved volumetric reconstruction is calculated. Calculating the relative modulation transfer function can include dividing a Fourier transform of the residual by a Fourier transform of the baseline volumetric representation.

At block 208, out-of-threshold frequency components can be determined from the RMTF distribution from block 206. Determining the out-of-threshold frequency components can include determining a threshold and identifying all frequency components that exceed the threshold. For example, an upper threshold can be established and all out-of-threshold frequency components can be those components that have a spatial frequency above the upper threshold value. In some cases, the threshold can be preset. In some cases, the threshold can be user set. In some cases, the threshold can be manually altered by the user through a graphical user interface. In such cases, any output that relies on the threshold (e.g., volumetric reconstructions, RMTF distribution charts, etc.) can be dynamically updated as the user changes the threshold, thus allowing a skilled user to dial in a desired threshold based on changes in the outputs.

At block 210, a representation of the out-of-threshold frequency components can be stored at block 210. The representation of the out-of-threshold frequency components can be stored in any suitable format. In some cases, the representation of the out-of-threshold frequency components can be stored as a masking function that can be applied to an improved volumetric reconstruction (e.g., in the frequency domain, although that need not always be the case).

At block 212, representation of the out-of-threshold frequency components can be accessed (e.g., from the storage used to store the representation at block 210).

At block 214, a filter can be applied to the improved volumetric reconstruction from block 202 to filter out the out-of-threshold frequency components based on the representation of the out-of-threshold frequency components from block 212. In some cases, filgering out these out-of-threshold frequency components can include accessing a masking function and applying the masking function to the improved volumetric reconstruction. The output from block 214 can be an improved and filtered volumetric reconstruction.

At block 216, the improved and filtered volumetric reconstruction can be stored and/or presented, such as stored using a local or remote storage device (e.g., for later use), or presented using an input/output device (e.g., input/output module 108 of FIG. 1). In some cases, storing and/or presenting the improved and filtered volumetric reconstruction can include performing further processing on the improved and filtered volumetric reconstruction, such as to segment structures within the reconstruction.

While process 200 is depicted with certain blocks in a certain order, in some cases process 200 can include fewer or additional blocks, or blocks in other orders. For example, in some cases, process 200 can include only blocks 202, 212, 214, and 216, where an improved volumetric reconstruction is received and filtered using a pre-stored representation of the out-of-threshold frequency components. In another example, process 200 can include additional blocks before block 202 regarding how the improved volumetric reconstruction is generated from first imaging data and second imaging data by training a neural network using at least a portion of the first imaging data and second imaging data, then applying the neural network to the first imaging data (or a reconstruction thereof) to generate the improved volumetric reconstruction. In another example, process 200 can leave out blocks 210, 212 and simply use the out-of-threshold frequency components from block 208 directly in block 214 to filter the improved volumetric reconstruction.

While described with reference to volumetric reconstructions and representations, in some cases process 200 can occur using reconstructions and representations with other dimensionality, such as two-dimensional images.

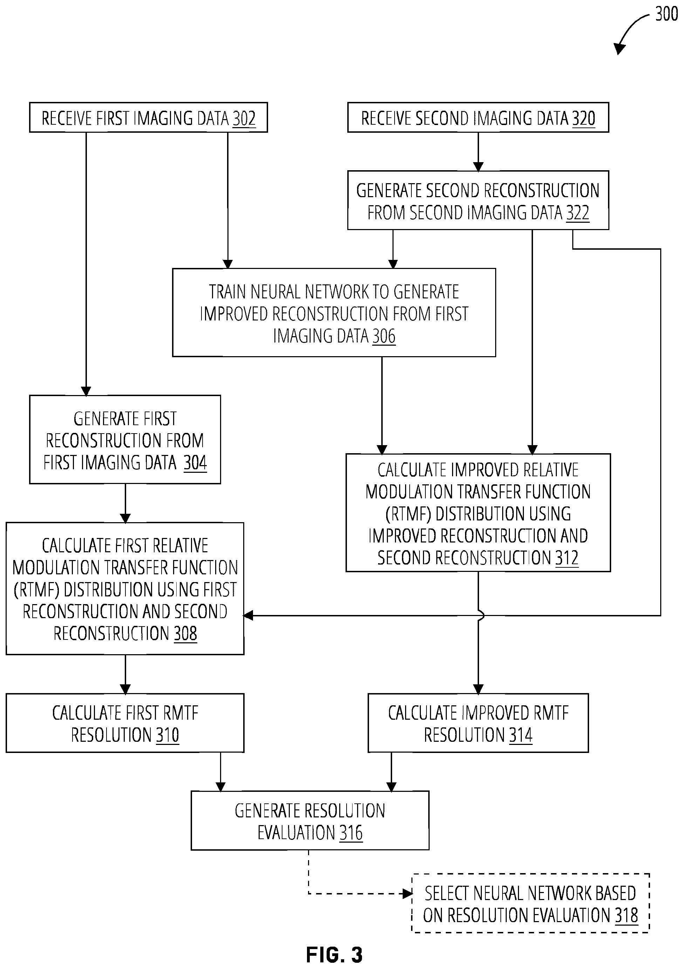

FIG. 3 is a process 300 for evaluating neural-network-based resolution improvements according to certain aspects of the present disclosure. Process 300 can be performed using any suitable hardware, such as processing module 106 of FIG. 1.

At block 302, first imaging data is received. First imaging data can include any suitable imaging data, such as x-ray imaging data.

At block 320, second imaging data is received. Second imaging data can include any suitable imaging data, such as x-ray imaging data. First imaging data and second imaging data can be of the same subject. In some cases, at least a portion of the subject imaged by the first imaging data will overlap with the portion of the subject imaged by the second imaging data. The second imaging data can be acquired at a higher resolution than the first imaging data.

At block 322, a second reconstruction can be generated from the second imaging data. The second reconstruction can be a volumetric representation of the subject based on reconstruction of the second imaging data.

At block 306, a neural network (e.g., DNN) can be trained to generate an improved reconstruction from at least a portion of the first imaging data (or a reconstruction thereof). The neural network can be fed at least a portion of the first imaging data (or a reconstruction thereof) as input and can output an improved reconstruction (or improved imaging data that can be used to generate an improved reconstruction). For example, the input can be that portion of the first imaging data that overlaps with the second imaging data (e.g., that portion of the subject covered by both the first imaging data and the second imaging data). The neural network can then be trained to minimize a loss function based on comparison of the improved reconstruction and the second reconstruction from block 322.

Once the neural network has been sufficiently trained, the neural network can be applied to the entire set of first imaging data to generate a improved reconstruction covering the full region covered by the first imaging data. This improved reconstruction will have a higher resolution than the raw first imaging data.

At block 312, an improved RMTF distribution can be calculated for the improved reconstruction. As disclosed in further detail herein, the RMTF can be calculated using the improved reconstruction as the comparison reconstruction and the second reconstruction as the baseline.

At block 314, an improved RMTF resolution can be calculated from the improved RMTF distribution from block 312. Calculating the improved RMTF resolution can include determining a threshold (e.g., a contrast threshold) for resolution evaluation. In some cases, the threshold can be preset or user set. Calculating the improved RMTF resolution can include performing a regression analysis on the improved RMTF distribution to generate an improved RMTF curve (e.g., a polynomial regression curve), then identifying the spatial frequency at which the improved RMTF curve passes the threshold. That spatial frequency can be the improved RMTF resolution.

At block 304, a first reconstruction can be generated from the first imaging data.

At block 308, a first RMTF distribution can be calculated for the first reconstruction. As disclosed in further detail herein, the RMTF can be calculated using the first reconstruction as the comparison reconstruction and the second reconstruction as the baseline.

At block 310, a first RMTF resolution can be calculated from the first RMTF distribution from block 308. Calculating the first RMTF resolution can include determining a threshold (e.g., a contrast threshold) for resolution evaluation. In some cases, the threshold can be preset or user set. The threshold at block 310 can be the same as the threshold used at block 314. Calculating the first RMTF resolution can include performing a regression analysis on the first RMTF distribution to generate a first RMTF curve (e.g., a polynomial regression curve), then identifying the spatial frequency at which the first RMTF curve passes the threshold. That spatial frequency can be the first RMTF resolution.

At block 316, a resolution evaluation can be generated. Generating the resolution evaluation at block 316 can include comparing the first RMTF resolution with the improved RMTF resolution. In some cases, the resolution evaluation is merely the difference between the first RMTF resolution and the improved RMTF resolution, representing an amount of resolution boost achieved by the neural network. Specifically, this measurement is the resolution boost not attributable to hallucinations.

In some cases, generating the resolution evaluation at block 316 can include presenting the resolution evaluation, such as using an input/output device (e.g., input/output module 108 of FIG. 1). In some cases, generating the resolution evaluation at block 316 can include taking other action based on the resolution evaluation, such as automatically marking a particular neural network, a particular scan recipe, or other element associated with the first imaging data as acceptable when the resolution evaluation meets a sufficient level (e.g., a sufficient level of improvement or a sufficient spatial frequency).

In some optional cases, process 300 continues at block 318 by selecting a neural network based on the resolution evaluation from block 316. Selecting a neural network to use can include selecting the neural network from block 306 if one or more conditions are met based on the resolution evaluation. In some cases, the one or more conditions includes determining that the amount of improvement between the first RMTF resolution and the improved RMTF resolution exceeds a threshold improvement value. In some cases, the one or more conditions includes determining that the improved RMTF resolution exceeds a minimum threshold value.

In some cases, at least portions of process 300 can repeat multiple times to train multiple neural networks, each of which may generate different improved reconstructions having different improved RMTF resolutions. In such cases, block 318 can include comparing the resolution evaluation for each of the different improved reconstructions to identify a desired neural network for further use. In some cases, the desired neural network is associated with the improved reconstruction having the greatest improved RMTF resolution. In some cases, the desired neural network is associated with the improved reconstruction having at least a minimum threshold improved RMTF resolution and has a lowest computational cost (e.g., training time and processing time). Other factors of the neural network and/or improved reconstruction can be taken into account and minimized/maximized as desired.

While process 300 is depicted with certain blocks in a certain order, in some cases process 300 can include fewer or additional blocks, or blocks in other orders.

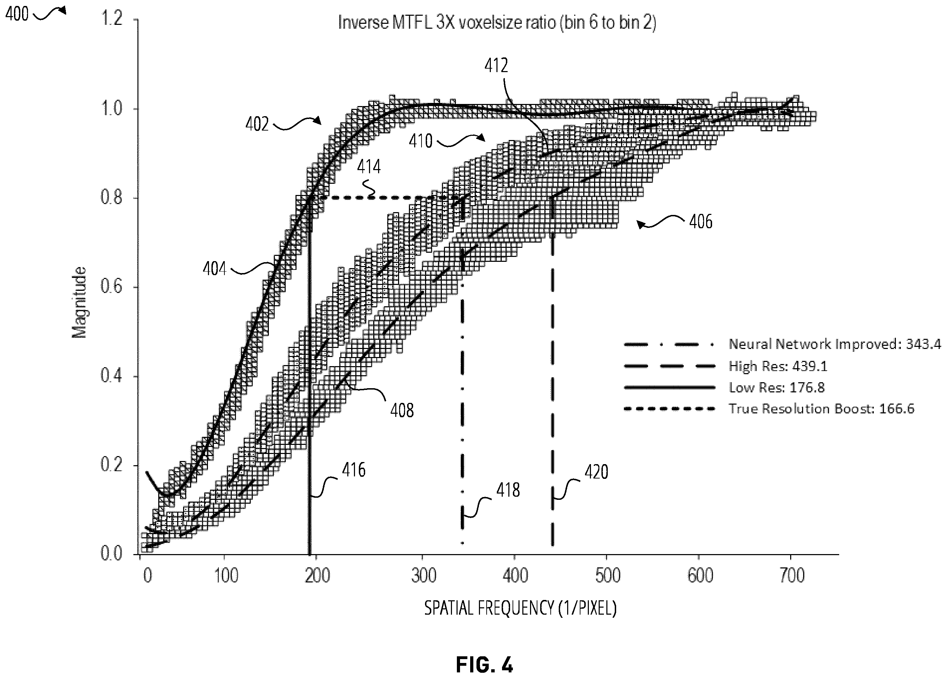

FIG. 4 is a graph 400 depicting RMTF distributions 402, 406, 410 according to certain aspects of the present disclosure. The data used to generate graph 400 came from x-ray imaging scans of a common subject. A low-resolution scan and high-resolution scan were acquired of the common subject. A low-resolution volume (e.g., $V_1$ as described herein) was generated from the low-resolution scan data. A high-resolution volume (e.g., $V_2$ as described herein) was generated from the high-resolution scan data. A neural-network-improved volume (e.g., $V_{12}$ as described herein) was generated from low-resolution scan data after being processed by a trained neural network.

The graph 400 shows the three distributions corresponding to the RMTF magnitude at different spatial frequencies for each of the volumetric reconstructions. Distribution 402 depicts the RMTF distribution for the low-resolution volume. Distribution 406 depicts the RMTF distribution for the high-resolution volume. Distribution 410 depicts the RMTF distribution for a the neural-network-improved volume.

Each of these distributions can be fit with analytical curves (e.g., high order polynomials). Line 404 depicts a polynomial regression curve of the distribution 402 data. Line 404 depicts a polynomial regression curve of the distribution 406 data. Line 408 depcits a polynomial regression curve of the distribution 410.

A threshold 414 (e.g., contrast threshold) can be used to define resolution by providing a cutoff frequency that can be defined as the resolution. For example, resolution can be defined by the frequency at which a distribution (e.g., an analytical curve associated with the distribution) crosses a threshold magnitude (e.g., 0.8 as depicted in graph 400). This threshold 414 can represent an amount of desired contrast in the imaging data. Thus, the resolution determined by lines 404, 408, 412 is a resolution that still provides the desired threshold amount of contrast. In graph 400, the resolutions for the low-resolution volume, high-resolution volume, and neural-network-improved volume are 176.8, 439.1, and 343.4 respectively. The unit of measurement for these values is (cycles/pixel). The true resolution boost provided by the neural network processing can be defined as the resolution of the neural-network-improved volume subtracted by the resolution of the low-resolution volume. In graph 400, this true resolution boost is 166.6 (166.6 = 343.4 - 176.8).

The RMTF resolutions can be presented as vertical lines or indicators where the respective RMTF distribution crosses the threshold. For example, the RMTF resolutions for lines 404, 408, 412 are shown by RMTF resolutions 416, 418, 420, respectively.

As the RMTF is a relative measure on two volume domain representations, it will be sensitive to the frequencies that are hallucinated, even if the frequency distribution of the two images (e.g., $V_{12}$ and $V_2$, or $V_{12}$ and S) are indistinguishable (e.g., the two volumetric representations are statistically similar). This is in contrast to a raw examination of the frequency contributions of V and S, which would not be sensitive to such hallucinations.

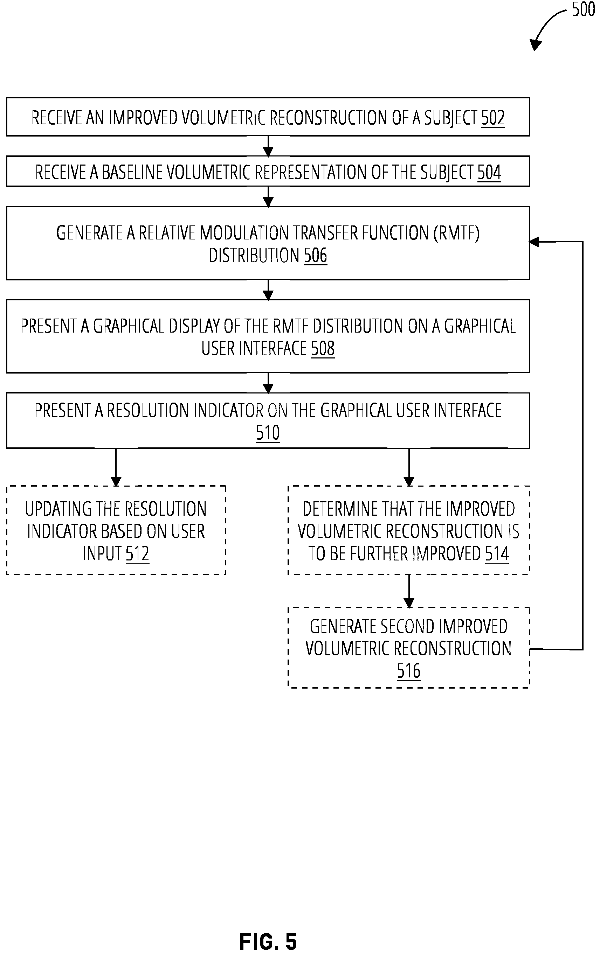

FIG. 5 is a flowchart depicting a process 500 for generating a graphical user interface, according to certain aspects of the present disclosure. process 500 can be performed using any suitable hardware, such as processing module 106 of FIG. 1.

At block 502, an improved volumetric reconstruction of a subject can be received. Receiving the improved volumetric reconstruction can be similar to or the same as block 202 of FIG. 2. The improved volumetric reconstruction can be generated by supplying a trained neural network with first imaging data acquired of the subject, the first imaging data acquired using an electromagnetic radiation imager.

At block 504, a baseline volumetric representation of the subject can be received. Receiving the baseline volumetric representation can be similar to or the same as block 218 of FIG. 2.

At block 506, a RMTF distribution for the improved volumetric reconstruction can be generated based at least in part on the improved volumetric reconstruction and the baseline volumetric representation. Block 506 can be the same as or similar to blocks 204, 206 of FIG. 2.

At block 508, a graphical display can be presented, on a graphical user interface, of the RMTF distribution for the improved volumetric reconstruction. The display of the RMTF distribution can appear similar to the distribution 410 and/or line 412 of FIG. 4, although that need not always be the case.

At block 510, a resolution indicator can be presented on the graphical user interface. The resolution indicator is indicative of the RMTF resolution for the improved volumetric reconstruction at a particular contrast threshold. The display of the resolution indicator can appear similar to RMTF resolution 418 of FIG. 4, although that need not always be the case.

At optional block 512, the resolution indicator can be updated. Updating the resolution indicator can include receiving user input to adjust the contrast threshold and updating the resolution indicator based on the adjusted contrast threshold. For example, increasing the contrast threshold should increase the RMTF resolution, thus the resolution indicator can be moved accordingly to indicate the increased RMTF resolution.

At optional block 514, a determination can be made that the improved volumetric reconstruction is to be further improved. In some cases, such a determination can be based on user input. For example, upon being presented with the graphical display of the RMTF distribution and the resolution indicator, the user can decide that the current improved volumetric reconstruction has not been sufficiently improved for their purposes, and can provide user input indicating that further improvement is desired. This user input can take any suitable form, such as clicking a button to initiate further improvement or selecting a desired resolution for a given contrast threshold. In some cases, the user can make their decision based on another graphical display, such as a display of the improved volumetric reconstruction itself.

In some cases, determining that the improved volumetric reconstruction is to be further improved can be performed automatically based on a preset resolution threshold. In such cases, a preset resolution threshold (e.g., previously set by user input or otherwise established) can be compared with the RMTF resolution of the improved volumetric reconstruction. If the RMTF resolution does not meet or exceed the resolution threshold, a determination can be made that the improved volumetric reconstruction is to be further improved.

Once the determination is made to further improve the improved volumetric reconstruction, process 500 can continue to block 516 with the generation of a second improved volumetric reconstruction. Generating this second improved volumetric reconstruction can include providing the first imaging data to the trained neural network again, but making adjustments such that the resolution boost achieved is greater than that achieved when generating the improved volumetric reconstruction. Such adjustments can include making use of different parameters designed to improve resolution even more than what was accomplished with the parameters used to generate the improved volumetric reconstruction. In some cases, these parameters can be parameters of the neural network itself or inputs to the neural network.

The result of block 516 is a second improved volumetric reconstruction that would have a higher RMTF resolution for a given contrast threshold than that of the the improved volumetric reconstruction. However, in some cases, the second improved volumetric reconstruction may not have a higher RMTF resolution than that of the improved volumetric reconstruction, in which case the system may learn that whatever differences in parameters were used to generate the second improved volumetric reconstruction lead to a less-desirable output, and may take that knowledge into account in future iterations of block 516.

In some cases, the second improved volumetric reconstruction will be passed back to an additional iteration of block 506. In such cases, this additional iteration of block 506 will generate a RMTF distribution for the second improved volumetric reconstruction, which can be referred to as a "second RMTF distribution." At an additional iteration of block 508, a graphical display of this second RMTF distribution can be presented the graphical user interface. At an additional iteration of block 510, a resolution indicator that indicates the RMTF resolution of this second RMTF distribution at the contrast threshold can be presented on the graphical user interface.

In some cases, iterations of blocks 506, 508, 510, 514, 516 can be repeated until a determination is made that no further improvement to the current improved volumetric reconstruction is needed.

While process 500 is depicted with certain blocks in a certain order, in some cases process 500 can include fewer or additional blocks, or blocks in other orders. For example, in some cases process 500 can include blocks 502, 504, 506, 514, and 516 without necessarily including blocks 508, 510, 512. In such cases, a resolution recovery process can iteratively generate further improved volumetric reconstructions until a desired amount of resolution recover is met (e.g., until a desired RMTF resolution is achieved for a given contrast threshold).

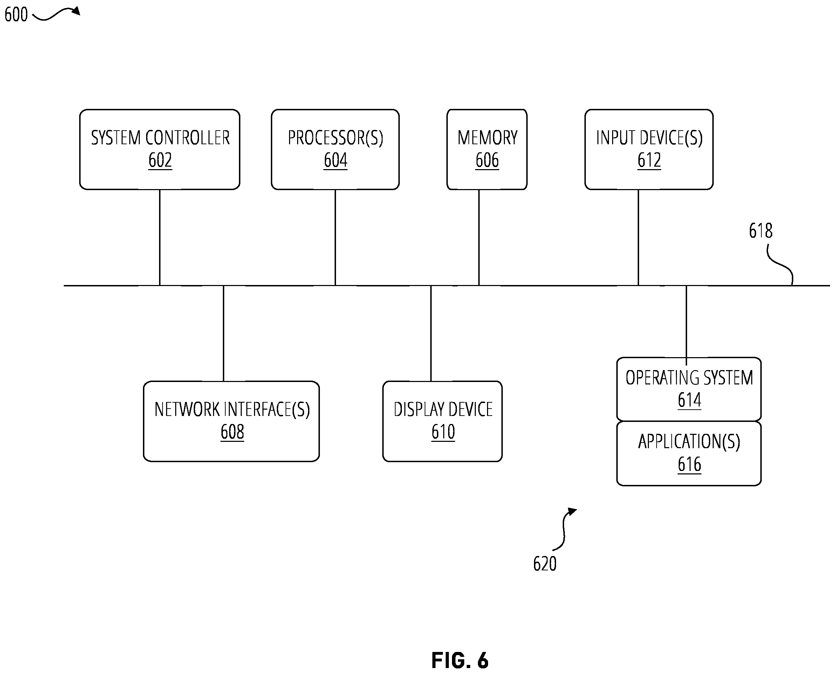

FIG. 6 is a block diagram of an example system architecture 600 for implementing features and processes of the present disclosure, such as those presented with reference to processes 200, 300 of FIGs.

2-3, respectively. The features and processes disclosed herein can be implemented using one or multiple instances of 600. The system architecture 600 can be used to implement a server (e.g., a cloud-accessible server), a user device (e.g., a smartphone or personal computer), or any other suitable device for performing some or all of the aspects of the present disclosure. The system architecture 600 can be implemented on any electronic device that runs software applications derived from compiled instructions, including without limitation personal computers, servers, smart phones, electronic tablets, game consoles, email devices, imagers (e.g., imaging machines, such as X-ray microscopes and CT scanners) and the like. In some implementations, the system architecture 600 can include one or more processors 604, one or more input devices 612, one or more display devices 610, one or more network interfaces 608, and one or more computer-readable media 620. Each of these components can be coupled by bus 618.

In some cases, system architecture 600 can be incorporated into a computing system capable of performing X-ray scans, such as a computing system used to control an X-ray imager or CT scanner. In some cases, system architecture 600 can be incorporated into a workstation computer used primarily for viewing and interpreting imaging data from an X-ray scan. In some cases, system architecture 600 can be incorporated into a computer system used to train neural networks, such as a computer system optimized for the training of deep neural networks.

Display device 610 can be any known display technology, including but not limited to display devices using Liquid Crystal Display (LCD) or Light Emitting Diode (LED) technology. Processor(s) 604 can use any known processor technology, including but not limited to graphics processors and multi-core processors. Input device 612 can be any known input device technology, including but not limited to a keyboard (including a virtual keyboard), mouse, track ball, and touch-sensitive pad or display. In some cases, audio inputs can be used to provide audio signals, such as audio signals of an individual speaking. Bus 618 can be any known internal or external bus technology, including but not limited to ISA, EISA, PCI, PCI Express, NuBus, USB, Serial ATA or FireWire.

Computer-readable medium 620 can be any medium that participates in providing instructions to processor 604 for execution, including without limitation, non-volatile storage media (e.g., optical disks, magnetic disks, flash drives, etc.) or volatile media (e.g., SDRAM, ROM, etc.). The computer-readable medium (e.g., storage devices, mediums, and memories) can include, for example, a cable or wireless signal containing a bit stream and the like. However, when mentioned, non-transitory computer-readable storage media expressly exclude media such as energy, carrier signals, electromagnetic waves, and signals per se.

Computer-readable medium 620 can include various instructions for implementing operating system 614 and applications 616 such as computer programs. The operating system 614 can be multi-user, multiprocessing, multitasking, multithreading, real-time and the like. The operating system 614 performs basic tasks, including but not limited to: recognizing input from input device 612; sending output to display device 610; keeping track of files and directories on computer-readable medium 620; controlling peripheral devices (e.g., storage drives, interface devices, etc.) which can be controlled directly or through an I/O controller; and managing traffic on bus 618. Computer-readable medium 620 can include various instructions for implementing firmware processes, such as a BIOS. Computer-readable medium 620 can include various instructions for implementing any of the processes described herein, including at least processes 200 , 300 of FIGs. 2-3, respectively.

Memory 606 can include high-speed random access memory and/or non-volatile memory, such as one or more magnetic disk storage devices, one or more optical storage devices, and/or flash memory (e.g., NAND, NOR). The memory 606 (e.g., computer-readable storage devices, mediums, and memories) can include a cable or wireless signal containing a bit stream and the like. However, when mentioned, non-transitory computer-readable storage media expressly exclude media such as energy, carrier signals, electromagnetic waves, and signals per se. The memory 606 can store an operating system, such as Darwin, RTXC, LINUX, UNIX, OS X, WINDOWS, or an embedded operating system such as VxWorks.

System controller 602 can be a service processor that operates independently of processor 604. In some implementations, system controller 602 can be a baseboard management controller (BMC). For example, a BMC is a specialized service processor that monitors the physical state of a computer, network server, or other hardware device using sensors and communicating with the system administrator through an independent connection. The BMC is configured on the motherboard or main circuit board of the device to be monitored. The sensors of a BMC can measure internal physical variables such as temperature, humidity, power-supply voltage, fan speeds, communications parameters and operating system (OS) functions.

The described features can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., Objective-C, Java), including compiled or interpreted languages, and it can be deployed in any form, including as a stand-alone program or as a module, component, subroutine, or other unit suitable for use in a computing environment.

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

To provide for interaction with a user, the features can be implemented on a computer having a display device such as a CRT (cathode ray tube) or LCD (liquid crystal display) monitor for displaying information to the user and a keyboard and a pointing device such as a mouse or a trackball by which the user can provide input to the computer.

The features can be implemented in a computing system that includes a back-end component, such as a data server, or that includes a middleware component, such as an application server or an Internet server, or that includes a front-end component, such as a client computer having a graphical user interface or an Internet browser, or any combination thereof. The components of the system can be connected by any form or medium of digital data communication such as a communication network. Examples of communication networks include, e.g., a LAN, a WAN, and the computers and networks forming the Internet.

The computing system can include clients and servers. A client and server are generally remote from each other and typically interact through a network. The relationship of client and server arises by virtue of computer programs running on the respective computers and having a client-server relationship to each other.

One or more features or steps of the disclosed embodiments can be implemented using an application programming interface (API). An API can define one or more parameters that are passed between a calling application and other software code (e.g., an operating system, library routine, function) that provides a service, that provides data, or that performs an operation or a computation.

The API can be implemented as one or more calls in program code that send or receive one or more parameters through a parameter list or other structure based on a call convention defined in an API specification document. A parameter can be a constant, a key, a data structure, an object, an object class, a variable, a data type, a pointer, an array, a list, or another call. API calls and parameters can be implemented in any programming language. The programming language can define the vocabulary and calling convention that a programmer will employ to access functions supporting the API.

In some implementations, an API call can report to an application the capabilities of a device running the application, such as input capability, output capability, processing capability, power capability, communications capability, and the like.

The foregoing description of the embodiments, including illustrated embodiments, has been presented only for the purpose of illustration and description and is not intended to be exhaustive or limiting to the precise forms disclosed. Numerous modifications, adaptations, and uses thereof will be apparent to those skilled in the art. Numerous changes to the disclosed embodiments can be made in accordance with the disclosure herein, without departing from the spirit or scope of the disclosure. Thus, the breadth and scope of the present disclosure should not be limited by any of the above described embodiments.

Although certain aspects and features of the present disclosure have been illustrated and described with respect to one or more implementations, equivalent alterations and modifications will occur or be known to others skilled in the art upon the reading and understanding of this specification and the annexed drawings. In addition, while a particular feature may have been disclosed with respect to only one of several implementations, such feature may be combined with one or more other features of the other implementations as may be desired and advantageous for any given or particular application.

One or more elements or aspects or steps, or any portion(s) thereof, from one or more of any of the claims below can be combined with one or more elements or aspects or steps, or any portion(s) thereof, from one or more of any of the other claims below or combinations thereof, to form one or more additional implementations and/or claims of the present disclosure.

As used below, any reference to a series of examples is to be understood as a reference to each of those examples disjunctively (e.g., "Examples 1-4" is to be understood as "Examples 1, 2, 3, or 4").

Example 1 is a method, comprising: receiving an improved volumetric reconstruction of a subject, the improved volumetric reconstruction generated by supplying a trained neural network with first imaging data acquired of the subject, the first imaging data acquired using an electromagnetic radiation imager; receiving a baseline volumetric representation of the subject; calculating a relative modulation transfer function (RMTF) distribution for the improved volumetric reconstruction based at least in part on the baseline volumetric representation; determining an upper threshold value; determining out-of-threshold frequency components based at least in part on the relative modulation transfer function distribution for the improved volumetric reconstruction and the upper threshold value; and filtering the improved volumetric reconstruction based at least in part on the out-of-threshold frequency components.

Example 2 is the method of example(s) 1, wherein calculating the RMTF distribution includes applying the formula

$$RMTF = \frac{fft(V_1 - V_2)}{fft(V_2)}$$

where RMTF is the RMTF distribution, $V_{improved}$ is the improved volumetric reconstruction, and B is the baseline volumetric representation.

Example 3 is the method of example(s) 1 or 2, further comprising storing a representation of the out-of-threshold frequency components in association with at least one of the improved volumetric reconstruction and the improved and filtered volumetric reconstruction.

Example 4 is the method of example(s) 1-3, wherein the baseline volumetric representation is a volumetric reconstruction generated from second imaging data acquired of the subject, the second imaging data having a higher resolution than the first imaging data.

Example 5 is the method of example(s) 4, wherein the first imaging data is acquired using a first set of operating parameters, and wherein the second imaging data is acquired using the electromagnetic radiation imager using a second set of operating parameters.

Example 6 is the method of example(s) 4 or 5, wherein training the neural network includes minimizing a loss function based at least in part on the improved volumetric reconstruction and the volumetric reconstruction generated from the second imaging data.

Example 7 is the method of example(s) 1-6, wherein the first imaging data is x-ray imaging data and the electromagnetic radiation imager is an x-ray imager.

Example 8 is the method of example(s) 1-7, further comprising: performing image segmentation on the improved and filtered volumetric reconstruction; and outputting the image segmentation results using a display device.

Example 9 is the method of example(s) 1-8, further comprising: receiving user input via a user input device, wherein determining the upper threshold value includes dynamically updating the upper threshold value based at least in part on the user input in response to receiving the user input; and presenting a display, the display including at least one of the out-of-threshold frequency components and the improved volumetric reconstruction, wherein presenting the display includes dynamically updating the display in response to receiving the user input.

Example 10 is a system comprising: a control system including one or more processors; and a memory having stored thereon machine readable instructions; wherein the control system is coupled to the memory, and the method of example(s) 1-8 is implemented when the machine executable instructions in the memory are executed by at least one of the one or more processors of the control system.

Example 11 is a computer-program product tangibly embodied in a non-transitory machine-readable storage medium, including instructions configured to cause a data processing apparatus to perform the method of example(s) 1-8.

Example 12 is a method for evaluating artificial intelligence resolution improvements, comprising: receiving first imaging data acquired of a subject, the first imaging data acquired using an electromagnetic radiation imager, the first imaging data having a first resolution; generating a first reconstruction based at least in part on the first imaging data; receiving second imaging data acquired of the subject, the second imaging data having a second resolution that is higher than the first resolution; generating a second reconstruction based at least in part on the second imaging data; training a neural network based at least in part on the first imaging data and the second imaging data, wherein the neural network, when trained, is usable to generate an improved reconstruction based at least in part on the first imaging data; generating the improved reconstruction using the neural network; calculating a first relative modulation transfer function (RMTF) distribution for the first reconstruction based at least in part on the second volumetric reconstruction; calculating an improved RMTF distribution for the improved reconstruction based at least in part on the second volumetric reconstruction; determining a contrast threshold; calculating a first RMTF resolution based at least in part on the first RMTF distribution and the contrast threshold; calculating an improved RMTF resolution based at least in part on the improved RMTF distribution and the contrast threshold; generating a resolution evaluation based at least in part on the first RMTF resolution and the improved RMTF resolution, the resolution evaluation indicative of an improvement in resolution achieved by the neural network; and presenting a display on a display device based at least in part on the generated resolution evaluation.

Example 13 is the method of example(s) 12, wherein calculating the first RMTF distribution includes applying the formula

$$RMTF = \frac{fft(V_1 - V_2)}{fft(V_2)}$$

where RMTF is the first RMTF distribution, $V_1$ is the first reconstruction, and $V_2$ is the second reconstruction.

Example 14 is the method of example(s) 12 or 13, wherein the first imaging data is acquired using a first set of operating parameters, and wherein the second imaging data is acquired using the electromagnetic radiation imager using a second set of operating parameters.

Example 15 is the method of example(s) 12-14, wherein the first reconstruction is a first volumetric reconstruction, wherein the second reconstruction is a second volumetric reconstruction, and wherein the improved reconstruction is an improved volumetric reconstruction.

Example 16 is the method of example(s) 12-15, wherein the first imaging data is x-ray imaging data and the electromagnetic radiation imager is an x-ray imager.

Example 17 is the method of example(s) 12-16, further comprising: selecting the neural network for future use based at least in part on the resolution evaluation.

Example 18 is the method of example(s) 17, wherein selecting the neural network for future use based at least in part on the resolution evaluation includes: receiving a plurality of alternate resolution evaluations associated with a plurality of alternate trained neural networks trained based at least in part on the first imaging data and the second imaging data; and comparing the plurality of alternate resolution evaluations with the resolution evaluation; and selecting the neural network based at least in part on the comparison between the plurality of alternate resolution evaluations and the resolution evaluation.

Example 19 is a system comprising: a control system including one or more processors; and a memory having stored thereon machine readable instructions; wherein the control system is coupled to the memory, and the method of example(s) 12-18 is implemented when the machine executable instructions in the memory are executed by at least one of the one or more processors of the control system.

Example 20 is a computer-program product tangibly embodied in a non-transitory machine-readable storage medium, including instructions configured to cause a data processing apparatus to perform the method of example(s) 12-18.

Example 21 is a method, comprising: receiving an improved volumetric reconstruction of a subject, the improved volumetric reconstruction generated by supplying a trained neural network with first imaging data acquired of the subject, the first imaging data acquired using an electromagnetic radiation imager; receiving a baseline volumetric representation of the subject; calculating a relative modulation transfer function (RMTF) distribution for the improved volumetric reconstruction based at least in part on the baseline volumetric representation; presenting a graphical display of the RMTF distribution for the improved volumetric reconstruction on a graphical user interface; and presenting a resolution indicator on the graphical user interface, the resolution indicator indicative of an RMTF resolution for the improved volumetric reconstruction at a contrast threshold.

Example 22 is the method of example 21, further comprising: receiving user input to adjust the contrast threshold; and updating the resolution indicator on the graphical user interface based on the adjusted contrast threshold.

Example 23 is the method of example 21 or 22, wherein calculating the RMTF distribution includes applying the formula

$$RMTF = \frac{fft(V_{improved} - B)}{fft(B)}$$

, where RMTF is the RMTF distribution, $V_{improved}$ is the improved volumetric reconstruction, and B is the baseline volumetric representation.

Example 24 is the method of example(s) 21-23, further comprising: determining that the improved volumetric reconstruction is to be further improved; generating, in response to determining that the improved volumetric reconstruction is to be further improved, a second improved volumetric reconstruction based at least in part on the first imaging data, wherein generating the second improved volumetric reconstruction includes adjusting one or more parameters associated with the trained neural network; calculating a second RMTF distribution for the second improved volumetric reconstruction based at least in part on the baseline volumetric representation; presenting a graphical display of the second RMTF distribution for the second improved volumetric reconstruction on the graphical user interface; and presenting a second resolution indicator on the graphical user interface, the second resolution indicator indicative of a second RMTF resolution for the second improved volumetric reconstruction at the contrast threshold or a second contrast threshold.

Example 25 is the method of example(s) 21-24, wherein determining that the improved volumetric reconstruction is to be further improved includes receiving user input indicative that the improved volumetric reconstruction is to be improved.

Example 26 is the method of example(s) 21-25, wherein determining that the improved volumetric reconstruction is to be further improved includes determining that the RTMF resolution falls below a resolution threshold.

**Claims**

1. A method, comprising:

    receiving an improved volumetric reconstruction of a subject, the improved volumetric reconstruction generated by supplying a trained neural network with first imaging data acquired of the subject, the first imaging data acquired using an electromagnetic radiation imager;
    receiving a baseline volumetric representation of the subject;
    calculating a relative modulation transfer function (RMTF) distribution for the improved volumetric reconstruction based at least in part on the baseline volumetric representation;
determining an upper threshold value;
determining out-of-threshold frequency components based at least in part on the relative modulation transfer function distribution for the improved volumetric reconstruction and the upper threshold value

2. The method of claim 1, wherein calculating the RMTF distribution includes applying the formula

$$RMTF = \frac{fft(V_{improved} - B)}{fft(B)}$$

where RMTF is the RMTF distribution, $V_{improved}$ is the improved volumetric reconstruction, and B is the baseline volumetric representation.

3. The method of claim 1, further comprising storing a representation of the out-of-threshold frequency components in association with at least one of the improved volumetric reconstruction and the improved and filtered volumetric reconstruction.

4. The method of claim 1, wherein the baseline volumetric representation is a volumetric reconstruction generated from second imaging data acquired of the subject, the second imaging data having a higher resolution than the first imaging data.

5. The method of claim 4, wherein the first imaging data is acquired using a first set of operating parameters, and wherein the second imaging data is acquired using the electromagnetic radiation imager using a second set of operating parameters.

6. The method of claim 4, wherein training the neural network includes minimizing a loss function based at least in part on the improved volumetric reconstruction and the volumetric reconstruction generated from the second imaging data.

7. The method of claim 1, wherein the first imaging data is x-ray imaging data and the electromagnetic radiation imager is an x-ray imager.

8. The method of claim 1, further comprising:

performing image segmentation on the improved and filtered volumetric reconstruction; and
outputting the image segmentation results using a display device.

9. The method of claim 1, further comprising:

receiving user input via a user input device, wherein determining the upper threshold value includes dynamically updating the upper threshold value based at least in part on the user input in response to receiving the user input; and
presenting a display, the display including at least one of the out-of-threshold frequency components and the improved volumetric reconstruction, wherein presenting the display includes dynamically updating the display in response to receiving the user input.

10. A system comprising:

a control system including one or more processors; and
a memory having stored thereon machine readable instructions;
wherein the control system is coupled to the memory, and the method of claim 1 is implemented when the machine executable instructions in the memory are executed by at least one of the one or more processors of the control system.

11. A computer-program product tangibly embodied in a non-transitory machine-readable storage medium, including instructions configured to cause a data processing apparatus to perform the method of claim 1.

12. The method of claim 1, wherein filtering the improved volumetric reconstruction based at least in part on the out-of-threshold frequency components.

13. A method for evaluating artificial intelligence resolution improvements, comprising:

receiving first imaging data acquired of a subject, the first imaging data acquired using an electromagnetic radiation imager, the first imaging data having a first resolution;
generating a first reconstruction based at least in part on the first imaging data;
receiving second imaging data acquired of the subject, the second imaging data having a second resolution that is higher than the first resolution;
generating a second reconstruction based at least in part on the second imaging data;
training a neural network based at least in part on the first imaging data and the second imaging data, wherein the neural network, when trained, is usable to generate an improved reconstruction based at least in part on the first imaging data;
generating the improved reconstruction using the neural network;
calculating a first relative modulation transfer function (RMTF) distribution for the first reconstruction based at least in part on the second volumetric reconstruction;

calculating an improved RMTF distribution for the improved reconstruction based at least in part on the second volumetric reconstruction;

determining a contrast threshold;

calculating a first RMTF resolution based at least in part on the first RMTF distribution and the contrast threshold;

calculating an improved RMTF resolution based at least in part on the improved RMTF distribution and the contrast threshold;

generating a resolution evaluation based at least in part on the first RMTF resolution and the improved RMTF resolution, the resolution evaluation indicative of an improvement in resolution achieved by the neural network; and

presenting a display on a display device based at least in part on the generated resolution evaluation.

14. The method of claim 13, wherein calculating the first RMTF distribution includes applying the formula

$$RMTF = \frac{fft(V_1 - V_2)}{fft(V_2)}$$

where RMTF is the first RMTF distribution, $V_1$ is the first reconstruction, and $V_2$ is the second reconstruction.

15. The method of claim 13, wherein the first imaging data is acquired using a first set of operating parameters, and wherein the second imaging data is acquired using the electromagnetic radiation imager using a second set of operating parameters.

16. The method of claim 13, wherein the first reconstruction is a first volumetric reconstruction, wherein the second reconstruction is a second volumetric reconstruction, and wherein the improved reconstruction is an improved volumetric reconstruction.

17. The method of claim 13, wherein the first imaging data is x-ray imaging data and the electromagnetic radiation imager is an x-ray imager.

18. The method of claim 13, further comprising: selecting the neural network for future use based at least in part on the resolution evaluation.

19. The method of claim 18, wherein selecting the neural network for future use based at least in part on the resolution evaluation includes:

receiving a plurality of alternate resolution evaluations associated with a plurality of alternate trained neural networks trained based at least in part on the first imaging data and the second imaging data; and

comparing the plurality of alternate resolution evaluations with the resolution evaluation; and selecting the neural network based at least in part on the comparison between the plurality of alternate resolution evaluations and the resolution evaluation.

20. A system comprising:

a control system including one or more processors; and

a memory having stored thereon machine readable instructions;

wherein the control system is coupled to the memory, and the method of claim 13 is implemented when the machine executable instructions in the memory are executed by at least one of the one or more processors of the control system.

21. A computer-program product tangibly embodied in a non-transitory machine-readable storage medium, including instructions configured to cause a data processing apparatus to perform the method of claim 13.

22. A method, comprising:

receiving an improved volumetric reconstruction of a subject, the improved volumetric reconstruction generated by supplying a trained neural network with first imaging data acquired of the subject, the first imaging data acquired using an electromagnetic radiation imager;

receiving a baseline volumetric representation of the subject;

generating a relative modulation transfer function (RMTF) distribution for the improved volumetric reconstruction based at least in part on the baseline volumetric representation; and presenting a graphical display of the RMTF distribution for the improved volumetric reconstruction on a graphical user interface;

presenting a resolution indicator on the graphical user interface, the resolution indicator indicative of an RMTF resolution for the improved volumetric reconstruction at a contrast threshold.

23. The method of claim 22, further comprising:

receiving user input to adjust the contrast threshold; and

updating the resolution indicator on the graphical user interface based on the adjusted contrast threshold.

24. The method of claim 22, wherein calculating the RMTF distribution includes applying the formula

$$RMTF = \frac{fft(V_{improved} - B)}{fft(B)}$$

where RMTF is the RMTF distribution, $V_{improved}$ is the improved volumetric reconstruction, and B is the baseline volumetric representation.

25. The method of claim 22, further comprising:

determining that the improved volumetric reconstruction is to be further improved;
generating, in response to determining that the improved volumetric reconstruction is to be further improved, a second improved volumetric reconstruction based at least in part on the first imaging data, wherein generating the second improved volumetric reconstruction includes adjusting one or more parameters associated with the trained neural network;
calculating a second RMTF distribution for the second improved volumetric reconstruction based at least in part on the baseline volumetric representation;
presenting a graphical display of the second RMTF distribution for the second improved volumetric reconstruction on the graphical user interface; and
presenting a second resolution indicator on the graphical user interface, the second resolution indicator indicative of a second RMTF resolution for the second improved volumetric reconstruction at the contrast threshold or a second contrast threshold.

26. The method of claim 22, wherein determining that the improved volumetric reconstruction is to be further improved includes receiving user input indicative that the improved volumetric reconstruction is to be improved.

27. The method of claim 22, wherein determining that the improved volumetric reconstruction is to be further improved includes determining that the RTMF resolution falls below a resolution threshold.

100

102

IMAGING DATA
SOURCE

106

PROCESSING
MODULE

104

SCAN PARAMETER
STORAGE

110

NEURAL NETWORK
STORAGE

112

MASKING FUNCTION
STORAGE

108

INPUT/OUTPUT
MODULE

**FIG. 1**

FIG. 2

300

RECEIVE FIRST IMAGING DATA 302

RECEIVE SECOND IMAGING DATA 320

GENERATE SECOND RECONSTRUCTION FROM SECOND IMAGING DATA 322

TRAIN NEURAL NETWORK TO GENERATE IMPROVED RECONSTRUCTION FROM FIRST IMAGING DATA 306

GENERATE FIRST RECONSTRUCTION FROM FIRST IMAGING DATA 304

CALCULATE IMPROVED RELATIVE MODULATION TRANSFER FUNCTION (RTMF) DISTRIBUTION USING IMPROVED RECONSTRUCTION AND SECOND RECONSTRUCTION 312

CALCULATE FIRST RELATIVE MODULATION TRANSFER FUNCTION (RTMF) DISTRIBUTION USING FIRST RECONSTRUCTION AND SECOND RECONSTRUCTION 308

CALCULATE FIRST RMTF RESOLUTION 310

CALCULATE IMPROVED RMTF RESOLUTION 314

GENERATE RESOLUTION EVALUATION 316

SELECT NEURAL NETWORK BASED ON RESOLUTION EVALUATION 318

**FIG. 3**

FIG. 4

EP 4 657 380 A1

500

RECEIVE AN IMPROVED VOLUMETRIC RECONSTRUCTION OF A SUBJECT 502

RECEIVE A BASELINE VOLUMETRIC REPRESENTATION OF THE SUBJECT 504

GENERATE A RELATIVE MODULATION TRANSFER FUNCTION (RMTF) DISTRIBUTION 506

PRESENT A GRAPHICAL DISPLAY OF THE RMTF DISTRIBUTION ON A GRAPHICAL USER INTERFACE 508

PRESENT A RESOLUTION INDICATOR ON THE GRAPHICAL USER INTERFACE 510

UPDATING THE RESOLUTION INDICATOR BASED ON USER INPUT 512

DETERMINE THAT THE IMPROVED VOLUMETRIC RECONSTRUCTION IS TO BE FURTHER IMPROVED 514

GENERATE SECOND IMPROVED VOLUMETRIC RECONSTRUCTION 516

**FIG. 5**

**FIG. 6**

<table>
<tr><td>Europäisches Patentamt<br>European Patent Office<br>Office européen des brevets</td><td align="center">**EUROPEAN SEARCH REPORT**</td><td>**Application Number**<br><br>EP 25 17 9258</td></tr>
</table>

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDREW MATTHEW ET AL: "Fully automated deep-learning-based resolution recovery", PROCEEDINGS OF THE SPIE, SPIE, US, vol. 12304, 18 October 2022 (2022-10-18), pages 123041Q-123041Q, XP060166584, ISSN: 0277-786X, DOI: 10.1117/12.2647272 ISBN: 978-1-5106-5738-0 | 1,3-13, 15-23, 25-27 | INV.<br>G06T11/00<br>G06T5/60<br>G06T5/73 |
| Y | * the whole document * | 2,14,24 | |
| Y | RAJAPAKSHE R ET AL: "QUALITY CONTROL TEST FOR ELECTRONIC PORTAL IMAGING DEVICES", MEDICAL PHYSICS, AIP, MELVILLE, NY, US, vol. 23, no. 7, July 1996 (1996-07), pages 1237-1244, XP000622095, ISSN: 0094-2405, DOI: 10.1118/1.597866 * page 1238 * | 2,14,24 | |
| A | WAI YAN RYANA FOK ET AL: "Deep learning in computed tomography super resolution using multi-modality data training", MEDICAL PHYSICS, AIP, MELVILLE, NY, US, vol. 51, no. 4, 16 November 2023 (2023-11-16), pages 2846-2860, XP072614045, ISSN: 0094-2405, DOI: 10.1002/MP.16825 * the whole document * | 1-27 | |

TECHNICAL FIELDS SEARCHED (IPC)

G06T

The present search report has been drawn up for all claims

| Place of search | Date of completion of the search | Examiner |
|---|---|---|
| Munich | 8 October 2025 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Erroneously filed documents**

**Erroneously filed claims (or parts thereof)**

1. A method, comprising:

receiving an improved volumetric reconstruction of a subject, the improved volumetric reconstruction generated by supplying a trained neural network with first imaging data acquired of the subject, the first imaging data acquired using an electromagnetic radiation imager;
receiving a baseline volumetric representation of the subject;
calculating a relative modulation transfer function (RMTF) distribution for the improved volumetric reconstruction based at least in part on the baseline volumetric representation;
determining an upper threshold value;
determining out-of-threshold frequency components based at least in part on the relative modulation transfer function distribution for the improved volumetric reconstruction and the upper threshold value

2. The method of claim 1, wherein calculating the RMTF distribution includes applying the formula
where RMTF is the RMTF distribution, $V_{improved}$ is the improved volumetric reconstruction, and B is the baseline volumetric representation.

3. The method of claim 1, further comprising storing a representation of the out-of-threshold frequency components in association with at least one of the improved volumetric reconstruction and the improved and filtered volumetric reconstruction.

generating a resolution evaluation based at least in part on the first RMTF resolution and the improved RMTF resolution, the resolution evaluation indicative of an improvement in resolution achieved by the neural network; and
presenting a display on a display device based at least in part on the generated resolution evaluation.

14. The method of claim 13, wherein calculating the first RMTF distribution includes applying the formula
where RMTF is the first RMTF distribution, $V_1$ is the first reconstruction, and $V_2$ is the second reconstruction.

15. The method of claim 13, wherein the first imaging data is acquired using a first set of operating parameters, and wherein the second imaging data is acquired using the electromagnetic radiation imager using a second set of operating parameters.

16. The method of claim 13, wherein the first reconstruction is a first volumetric reconstruction, wherein the second reconstruction is a second volumetric reconstruction, and wherein the improved reconstruction is an improved volumetric reconstruction.

17. The method of claim 13, wherein the first imaging data is x-ray imaging data and the electromagnetic radiation imager is an x-ray imager.

18. The method of claim 13, further comprising:
selecting the neural network for future use based at least in part on the resolution evaluation.

19. The method of claim 18, wherein selecting the neural network for future use based at least in part on the resolution evaluation includes:
presenting a resolution indicator on the graphical user interface, the resolution indicator indicative of an RMTF resolution for the improved volumetric reconstruction at a contrast threshold.

23. The method of claim 22, further comprising:

receiving user input to adjust the contrast threshold; and
updating the resolution indicator on the graphical user interface based on the adjusted contrast threshold.

24. The method of claim 22, wherein calculating the RMTF distribution includes applying the formula
where RMTF is the RMTF distribution, $V_{improved}$ is the improved volumetric reconstruction, and B is the baseline volumetric representation.

25. The method of claim 22, further comprising:

determining that the improved volumetric reconstruction is to be further improved;
generating, in response to determining that the improved volumetric reconstruction is to be further improved, a second improved volumetric reconstruction based at least in part on the first imaging data, wherein generating the second improved volumetric reconstruction includes adjusting one or more parameters associated with the trained neural network;
calculating a second RMTF distribution for the second improved volumetric reconstruction based at least in part on the baseline volumetric representation;
presenting a graphical display of the second RMTF distribution for the second improved volumetric reconstruction on the graphical user interface; and
presenting a second resolution indicator on the graphical user interface, the second resolution indicator indicative of a second RMTF resolution for the second improved volumetric reconstruction at the contrast threshold or a second contrast threshold.